Europäisches Patentamt

European Patent Office

Office européen des brevets

(19)

(11) **EP 0 620 452 B1**

(12) **FASCICULE DE BREVET EUROPEEN**

(45) Date de publication et mention
de la délivrance du brevet:
**25.08.1999 Bulletin 1999/34**

(51) Int Cl.6: **G01T 1/178**, G01T 1/40

(21) Numéro de dépôt: **94400817.6**

(22) Date de dépôt: **14.04.1994**

(54) **Procédé et dispositif d'étalonnage en énergie d'un ensemble de détection électronique des rayonnements béta et photons X et gamma à distribution Compton émis par un aérosol radioactif**

Verfahren und Vorrichtung zur Energiekalibrierung einer Nachweiseinheit für Beta-, Röntgen- und Gammastrahlung eines radioaktiven Aerosols über die Compton Verteilung

Method and apparatus for the energy calibration of a detection unit for beta-, X-, and gamma-rays emitted by a radioactive aerosol by Compton distribution

(84) Etats contractants désignés:
**BE DE ES GB IT**

(30) Priorité: **16.04.1993 FR 9304514**

(43) Date de publication de la demande:
**19.10.1994 Bulletin 1994/42**

(73) Titulaire: **COMMISSARIAT A L'ENERGIE ATOMIQUE**
**75015 Paris Cédex 15 (FR)**

(72) Inventeur: **Dacosta Viera, David**
**F-13540 Puyricard (FR)**

(74) Mandataire: **Dubois-Chabert, Guy et al**
**c/o BREVATOME**
**25, rue de Ponthieu**
**75008 Paris (FR)**

(56) Documents cités:
**EP-A- 0 189 645**      **FR-A- 2 621 704**
**US-A- 3 914 602**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

La présente invention se rapporte d'une manière générale à la détection des aérosols radioactifs et à la détermination de leur activité béta et photonique (X et gamma) à distribution Compton.

Il est connu, pour détecter et examiner la présence d'aérosols radioactifs de faire passer l'atmosphère que l'on veut surveiller au travers d'un filtre sur lequel on retient les particules de l'aérosol et à analyser le filtrat ainsi recueilli devant des compteurs spécialisés. Ces particules radioactives se désintègrent en produisant soit des rayons alpha et béta (électrons) qui sont des fragments solides, soit des photons électromagnétiques X et gamma.

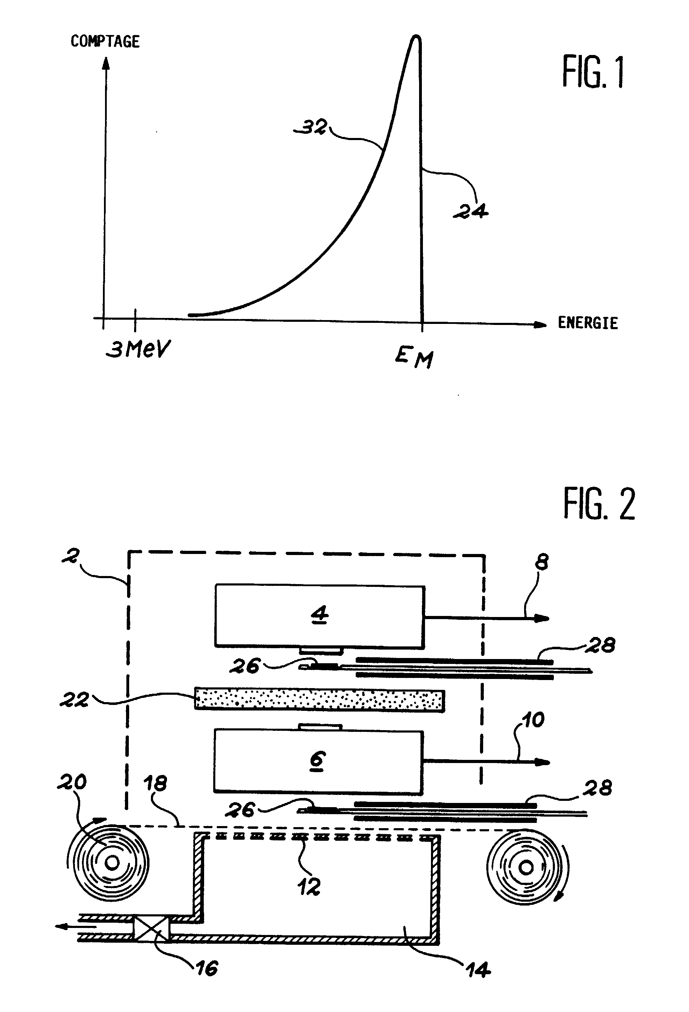

Les spectres obtenus avec les particules alpha ont des énergies qui se situent en général au delà de 3 MeV et se différencient donc très facilement des spectres béta et de la "distribution Compton" des spectres photoniques, lesquels se situent au contraire dans un même domaine d'énergie, de quelques dizaines de KeV à moins de 3 MeV. Les spectres alpha ont en outre la propriété très intéressante de comporter, du côté des énergies élevées, un front de descente rapide, quasi vertical en coordonnées amplitude-énergie (fig. 1).

Les spectres béta et photoniques coïncidant par contre en énergie, sont plus difficiles à séparer.

La technique couramment utilisée pour enregistrer séparément des particules béta et les photons (X, gamma) consiste à enregistrer la somme des spectres béta+(X, gamma), puis à interposer entre le dépôt radioactif à mesurer et le détecteur des écrans qui arrêtent les particules béta ; on détermine ainsi la seule contribution due aux photons (X, gamma). Une simple soustraction des spectres (X, gamma) de la somme des spectres béta + (X, gamma) permet de connaître le spectre des seules particules béta.

Afin que le résultat de cette soustraction soit le plus significatif possible, il faut impérativement que les "réponses" aux différents rayonnements des deux chaînes de détection soient les mêmes. Ceci impose deux conditions, à savoir l'identité des chaînes et de leur réglage en énergie.

Pour cela, il est de pratique courante d'effectuer l'enregistrement des différents spectres béta et (X, gamma) au moyen de deux chaînes de détection rigoureusement identiques et dont les semicteurs sont placés très proches l'un de l'autre (souvent superposés), l'un servant à la détection globale béta + (X, gamma) et l'autre, pourvu d'un écran absorbant les béta, servant à la détection des seuls photons (X, gamma).

Une autre condition nécessaire pour connaître avec précision la contribution du spectre (X, gamma), dans le spectre global, et donc pour déterminer avec précision le(s) spectre(s) béta, est le réglage précis et identique en énergie des deux chaînes de comptage.

Selon l'art antérieur, l'étalonnage en énergie est fait avec une source étalon béta et une source étalon gamma par la "méthode du rendement" qui consiste, pour chacune des sources étalons gamma ou béta utilisés, à enregistrer dans une géométrie déterminée et pour une position et une largeur de fenêtre d'énergie définies, un nombre déterminé d'impulsions par unité de temps. En réglant le gain de la chaîne de comptage, on se recale sur la "fenêtre d'énergie" définie.

Mais un tel étalonnage n'est valable que pour l'énergie correspondant à celle de la source étalon. D'autre part, ces "fenêtres" ont une certaine largeur, d'où une certaine imprécision sur le réglage en énergie.

Le réglage en énergie selon l'invention permet précisément de supprimer ces imprécisions à l'aide de moyens simples et efficaces.

La présente invention a précisément pour objet un procédé d'étalonnage en énergie d'un ensemble de détection électronique des rayonnements béta et photons X et gamma à distribution Compton, émis par un aérosol radioactif, comportant deux chaînes identiques dont l'une enregistre le spectre béta+photons et l'autre le spectre photons et dont on fait la différence des indications, se caractérise en ce que l'on effectue cet étalonnage à l'aide de sources alpha de la manière suivante :

- on munit les deux chaînes de détecteurs alpha, béta, photons identiques sous la forme de semicteurs suffisamment minces pour n'être sensibles qu'à la partie "distribution Compton" du spectre photonique ;
- on soumet chacun des semicteurs à une source étalon alpha, d'énergie connue, identique pour chaque source, et l'on enregistre sur chaque chaîne le spectre des particules alpha de la source correspondante ;
- on fait correspondre le seuil de calibration énergétique de chacune des chaînes avec le front de descente quasi vertical du spectre alpha des sources étalon pour régler les deux chaînes de façon identique en énergie.

L'originalité de la présente invention réside dans la constatation inattendue du fait que les deux particularités rappelés précédemment des spectres de rayonnement alpha émis par les aérosols radioactifs (énergie supérieure à 3 MeV et front de descente du spectre très rapide et quasiment vertical, c'est-à-dire monoénergétique) permettaient d'effectuer l'étalonnage d'une chaîne de mesure de rayonnement béta à l'aide de rayonnement alpha, c'est-à-dire d'une nature différente de ceux que l'on cherche à mesurer. Par ailleurs, les rayonnements béta et photons, bien que superposés entre eux en énergie ne se mêlent nullement au rayonnement alpha qui est d'énergie plus élevée, ce qui facilite évidemment leur séparation d'avec le rayonnement alpha. Enfin, le fait de choisir pour les deux chaînes des détecteurs alpha, béta et photons sous la forme de semicteurs suffisamment minces pour se laisser traverser par le pic énergétique des photons et n'être sensible qu'à la partie distribution Compton de ce spectre permet également de ne prendre en considération que la partie réellement utile du spectre photonique. La mise en coïncidence énergétique des deux fronts de descente du spectre alpha des sources étalon permet de s'assurer que les deux chaînes se comporteront par la suite de façon identique en énergie vis-à-vis des rayonnements qu'elles auront à analyser.

De toute façon, l'invention sera mieux comprise en se référant à la description qui suit d'un exemple de mise en oeuvre, description qui sera faite à titre indicatif et non limitatif en se référant aux figures 1 à 4 ci-jointes, sur lesquelles :

- la figure 1 montre en coordonnées cartésiennes, comptage = F(énergie), le spectre alpha d'une source étalon ;
- la figure 2 est une vue schématique de la tête de mesure d'un ensemble de détection des rayonnements béta et/ou photons X et gamma conformes à l'invention ;
- la figure 3 montre en coordonnées cartésiennes, comptage = F (énergie), les spectres alpha de la source étalon et des deux chaînes de l'ensemble objet de l'invention autour du seuil de calibration lors du réglage en énergie ;
- la figure 4 est un schéma de la partie électronique connue d'un tel ensemble de détection des rayonnements béta et/ou photons X et gamma.

Conformément à l'invention, la figure 2 montre dans un blindage épais en plomb 2, les deux semicteurs minces 4 et 6 identiques et aptes à transformer en impulsions électriques l'arrivée d'une particule alpha ou béta ou d'un photon X ou gamma. Les charges électriques issues du semicteur 4 sont envoyées sur la voie électronique 8 et des impulsions issues du semicteur 6 sont adressées sur la voie électronique 10. C'est le lieu de rappeler ici que par semicteur mince on entend un dispositif de ce genre capable d'enregistrer la partie distribution Compton du spectre d'un photon mais non le pic photoélectrique de ce même photon. Sous les deux semicteurs 4 et 6 se trouve disposé un support filtrant 12 fermant une chambre d'aspiration 14 muni d'une pompe à vide et d'un régulateur de débit 16. Devant cette grille 12 se déplace séquentiellement un filtre 18 susceptible de retenir des aérosols radioactifs présents dans l'atmosphère à examiner. Ce filtre 18 se déroule automatiquement dans le temps sous la commande du dérouleur 20. Conformément à l'invention un écran 22 est prévu entre les deux semicteurs 4 et 6 pour absorber les particules alpha et béta émises par le dépôt des aérosols radioactifs sur le filtre 18. Il en résulte donc une spécialisation des deux semicteurs 4 et 6, dont le premier 4 ne reçoit que des photons et dont le second 6 reçoit l'ensemble des rayonnements alpha, béta et photons. Le rayonnement alpha ayant, comme on le verra sur la figure 1, une énergie toujours supérieure à 2 MeV et ne se mêlant pas avec les bandes énergétiques réservées aux béta et aux photons, peut donc être trié facilement par une fenêtre appropriée en énergie. La soustraction des indications des détecteurs 4 et 6 procure par conséquent les renseignements recherchés sur l'intensité des rayonnements béta d'une part et des photons de l'autre.

On voit sur la figure 1, la forme connue d'un spectre de rayonnement alpha dont le front de descente 24 est quasiment vertical dans le graphique (comptage, énergie) et a lieu pour l'énergie maximum $E_m$. Ce spectre de rayonnement alpha occupe dans la bande des énergies une zone toujours située au-dessus de 3 MeV.

Les éléments décrits jusqu'à maintenant dans la figure 2 sont communs avec ceux de l'art antérieur dans un tel ensemble de détection électronique. Selon l'invention et pour mettre en oeuvre le procédé original d'étalonnage d'un tel ensemble, on prévoit au voisinage des semicteurs 4 et 6 une source étalon alpha 26 susceptible de se rétracter dans un guide de position 28. De façon pratique par exemple, ces sources 26 sont placées à l'extrémité d'une aiguille retractable qui coulisse dans le guide de position 28 de façon à ce qu'en position sortie, la source 26 soit vue des semicteurs 4 et 6 et qu'en position rétractée le rayonnement soit masqué pour ces mêmes semicteurs.

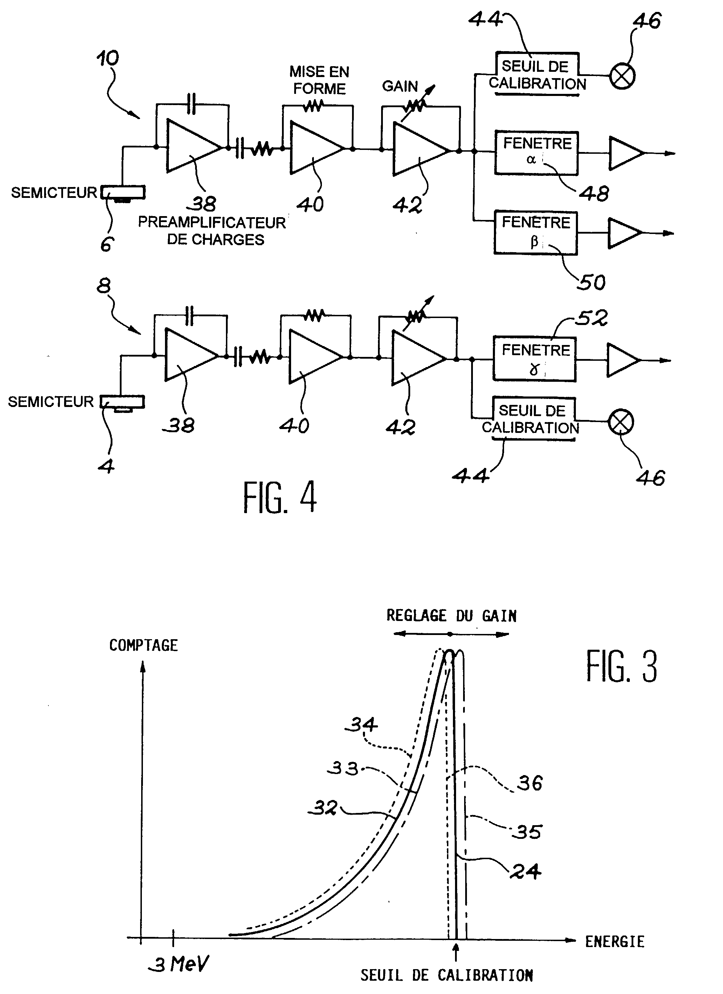

La figure 3 permet de comprendre comment on effectue l'étalonnage en énergie des deux chaînes composant l'ensemble de détection objet de l'invention. Le seuil de calibration alpha étant défini par le front vertical 24 du spectre alpha étalon 32 dû aux sources 26, on examine où se situent les réponses 35 et 36 de chacune des chaînes et il suffit alors de régler les gains propres de ces mêmes chaînes pour faire coïncider exactement les fronts de descente des spectres 33 et 34 avec le front de descente 24 correspondant au seuil de calibration pour le spectre alpha de la source 26 servant à l'étalonnage. On est alors certain à ce moment que les deux chaînes composant l'ensemble de détection ont la même échelle énergétique, ce qui rend possible, sans introduction d'erreur systématique, la soustraction de leur deux indications pour obtenir séparément le taux de comptage des rayonnements béta et des photons X et gamma.

La figure 4 montre le schéma électronique de la partie de l'ensemble de détection associée à la tête de mesure de la figure 2. Ce circuit électronique est d'un type en soi connu et sera par conséquent décrit de façon sommaire.

Sur cette figure, on retrouve les semicteurs 4 et 6 associés aux voies 8 et 10 déjà décrites sur la figure 2.

Chacune des voies 8 et 10 comporte un préamplificateur de charges 38, un circuit de mise en forme des impulsions 40 et un circuit de réglage de gain 42 avec lequel on règle précisément le seuil de calibration de chaque chaîne en énergie. Ce seuil de calibration est enregistré en 44 et affiché par une lampe témoin 46.

Il suffit donc de contrôler l'apparition du clignotement de la lampe témoin 46 pour être assuré du réglage précis en énergie de la chaîne de mesure correspondante.

Les impulsions alpha, d'énergie supérieure à 3 MeV, sont comptabilisées dans la fenêtre 48 et la soustraction des impulsions alpha, béta, photons de la voie 10 et photons de la voie 8 est effectuée au niveau des fenêtres 50 (béta) et 52 (photons).

L'homme du métier aura dans chaque cas particulier à choisir le matériau constituant les sources radioactives 26 d'étalonnage et l'on peut par exemple recourir de façon simple à des sources de polonium tel que $^{208}_{84}$Po et d'américium tel que $^{241}_{95}$Am qui sont émetteurs de particules alpha avec leurs fronts de descente situés respectivement à 5,11 MeV pour le Po et à 5,47 MeV pour l'Am.

## Revendications

1. Procédé d'étalonnage en énergie d'un ensemble de détection électronique des rayonnements béta et photons X et gamma à distribution Compton, émis par un aérosol radioactif, comportant deux chaînes identiques dont l'une enregistre le spectre béta+photons et l'autre le spectre photons et dont on fait la différence des indications, caractérisé en ce que l'on effectue cet étalonnage à l'aide de sources alpha de la manière suivante :

   - on munit les deux chaînes de détecteurs alpha, béta, photons identiques sous la forme de semicteurs (4, 6) suffisamment minces pour n'être sensibles qu'à la partie "distribution Compton" du spectre photonique ;
   - on soumet chacun des semicteurs (4, 6) à une source étalon alpha (26), d'énergie connue, identique pour chaque source, et l'on enregistre sur chaque chaîne le spectre des particules alpha de la source correspondante ;
   - on fait correspondre le seuil de calibration énergétique de chacune des chaînes avec le front de descente (24) quasi vertical du spectre alpha des sources étalon pour régler les deux chaînes de façon identique en énergie.

2. Dispositif pour la mise en oeuvre du procédé d'étalonnage selon la revendication 1, dans lequel des détecteurs (4, 6) de deux chaînes sont constitués de deux semicteurs minces adjacents et séparés par un écran (22) absorbant les particules alpha et béta, placés au voisinage d'un dépôt d'aérosols fixé par aspiration sur un filtre (18), le dispositif comportant au moins une source alpha (26) disposé au voisinage des semicteurs (4, 6) et rétractable dans une gaine étanche (28) masquant le rayonnement alpha pour les deux semicteurs.

## Patentansprüche

1. Verfahren zur Energiekalibrierung einer elektronischen Nachweiseinheit für Beta-, Röntgen- und Gammastrahlung eines radioaktiven Aerosols über die Compton-Verteilung, die zwei identische Ketten umfaßt, von denen die eine das Beta+Photonen-Spektrum aufzeichnet und die andere das Photonenspektrum, wobei man dann die Differenz der Angaben berechnet,

   **dadurch gekennzeichnet,**

   daß man diese Kalibrierung mit Hilfe von Alphaquellen auf folgende Weise durchführt:

   - man bestückt beide Ketten mit identischen Alpha-, Beta-Photonendetektoren in Form von Halbleiter-Detektoren (4, 6), die ausreichend dünn sind, um nur für den Teil "Compton-Verteilung" des Photonenspektrums empfindlich zu sein;
   - man setzt jeden der Halbleiter-Detektoren (4, 6) einer Alpha-Kalibrierungsquelle (26) aus und zeichnet in jeder Kette das Spektrum der Alphateilchen der entsprechenden Quelle auf;
   - man bringt den Energiekalibrierungs-Schwellenwert jeder Kette in Übereinstimmung mit der absteigenden, quasi vertikalen Flanke (24) des Alpha-Spektrums der Kalibrierungsquellen, um bei beiden Ketten eine identische Energiabstimmung bzw. -einstellung vorzunehmen.

2. Vorrichtung zur Anwendung des Kalibrierungsverfahrens nach Anspruch 1, bei dem die Detektoren (4, 6) von zwei Ketten durch zwei dünne, nebeneinanderliegende und durch einen die Alpha- und Betateilchen absorbierenden Schirm (22) getrennte Halbleiter-Detektoren gebildet werden, angeordnet in der Nähe einer durch Ansaugung an einem Filter (18) befestigten Aerosolkammer, wobei die Vorrichtung wenigstens eine Alphaquelle (26) umfaßt, angeordnet in der Nähe der Halbleiter-Detektoren (4, 6) und zurückziehbar in eine dichte Hülle (28), die die Alphastrahlung gegenüber den beiden Halbleiter-Detektoren abschirmt.

## Claims

1. Method for the energy calibration of an electronic detection unit for the detection of Compton distribution gamma, X photon and beta rays emitted by a radioactive aerosol, having two identical chains, whereof one records the beta+photon spectrum and the other the photon spectrum and the difference of the indications is formed, characterized in that said calibration takes place with the aid of alpha sources in the following way:

- the two chains are provided with identical photon, beta and alpha detectors in the form of semiconductor detectors (4, 6), which are sufficiently thin to only be sensitive to the Compton distribution part of the photonic spectrum,
- each of the semiconductor detectors (4, 6) is subject to the action of a standard alpha source (26) of known energy and which is identical for each source and on each chain is recorded the spectrum of the alpha particles of the corresponding source,
- correspondence is brought about between the energy calibration threshold of each of the chains and the quasi-vertical falling front (24) of the alpha spectrum of the standard sources in order to bring about an identical energy regulation of the two chains.

2. Device for implementing the calibration method according to claim 1, wherein the detectors (4, 6) of the two chains are constituted by two adjacent, thin semiconductor detectors separated by a shield (22) absorbing the alpha and beta particles and placed in the vicinity of a deposit of aerosols fixed by suction to a filter (18), the device having at least one alpha source (26) located in the vicinity of the semiconductor detctors (4, 6) and retractable into a tight sheath (28) masking the alpha radiation for the two semiconductor detectors.

FIG. 1

FIG. 2

FIG. 4

FIG. 3